# EUROPEAN PATENT SPECIFICATION

(11) **EP 2 838 962 B1**
(45) Date of publication and mention of the grant of the patent: **14.12.2016**
(21) Application number: 12728852.0
(22) Date of filing: 19.04.2012
(51) Int. Cl.: C09D 5/32, F24J 2/48, G02B 1/10

(54) **SOL-GEL BASED SPECTRALLY SELECTIVE SOLAR ABSORBER COATINGS AND THE PROCESS FOR PRODUCING SAID COATINGS**
AUF SOL-GEL BASIERENDE SPEKTRALSELEKTIVE SOLARABSORBERBESCHICHTUNGEN UND VERFAHREN ZUR HERSTELLUNG SOLCHER BESCHICHTUNGEN
REVÊTEMENTS ABSORBANT L'ÉNERGIE SOLAIRE SPECTRALEMENT SÉLECTIFS À BASE DE SOL-GEL ET PROCÉDÉ DE PRODUCTION DESDITS REVÊTEMENTS

(43) Date of publication of application: 25.02.2015
(73) Proprietor: Kemijski Institut, 1000 Ljubljana (SI)
(72) Inventor: JERMAN, Ivan, SI-3305 Vransko (SI); MIHELCIC, Mohor, SI-4228 Zelezniki (SI); KOZELJ, Matjaz, SI-1301 Krka (SI); OREL, Boris, SI-1000 Ljubljana (SI)
(74) Representative: Grünecker Patent- und Rechtsanwälte PartG mbB
(86) International application number: PCT/SI2012/000025
(87) International publication number: WO 2013/158049

(56) References cited:
- EP-A2- 2 243 860
- KUNI R ET AL: "Life expectancy prediction and application properties of novel polyurethane based thickness sensitive and thickness insensitive spectrally selective paint coatings for solar absorbers", SOLAR ENERGY MATERIALS AND SOLAR CELLS, ELSEVIER SCIENCE PUBLISHERS, AMSTERDAM, NL, vol. 95, no. 11, 11 May 2011 (2011-05-11), pages 2965-2975, XP028257478, ISSN: 0927-0248, DOI: 10.1016/J.SOLMAT.2011.05.014 [retrieved on 2011-06-02]
- JAPELJ B ET AL: "Preparation of a TiMEMO nanocomposite by the sol-gel method and its application in coloured thickness insensitive spectrally selective (TISS) coatings", SOLAR ENERGY MATERIALS AND SOLAR CELLS, ELSEVIER SCIENCE PUBLISHERS, AMSTERDAM, NL, vol. 92, no. 9, 1 September 2008 (2008-09-01), pages 1149-1161, XP022735464, ISSN: 0927-0248, DOI: 10.1016/J.SOLMAT.2008.04.003 [retrieved on 2008-05-27] & U. Posset ET AL: "Innovative Hybrid Coatings for Faqades" In: "Ovganosilicon Chemisty V", 1 January 2003 (2003-01-01), Wiley, Weinheim, XP55035754, pages 645-649, the whole document
- GUILLERMO QUESADA ET AL: "A comprehensive review of solar facades. Opaque solar facades", RENEWABLE AND SUSTAINABLE ENERGY REVIEWS, vol. 16, no. 5, 1 June 2012 (2012-06-01), pages 2820-2832, XP55035670, ISSN: 1364-0321, DOI: 10.1016/j.rser.2012.01.078

## Description

### Field of invention

Sol-gel spectrally selective coatings for harvesting solar thermal energy and sol-gel paints for their preparation

### Background of invention

Problems connected with high consumption of energy obtained from fossil fuels, manifesting as pollution of the living environment and as climate change due to exhaust of high amounts of greenhouse gases, especially CO₂, on the one hand, and the high price of oil together with growing concerns about the safety of nuclear power plants, on the other, are forcing society to obtain energy from other sources. Solar radiation yields an average power of 800 W/m², which makes utilization commercially interesting. This power is most effectively exploited by solar thermal collectors, absorbers of which are made from highly spectrally selective materials; mostly materials deposited on metallic sheets. Materials for the exploitation of solar radiation must exhibit strong absorption of solar light, which is electromagnetic radiation in UV-Vis-NIR, with wavelengths from 0.2 to 2.5 µm, and the lowest possible absorption in IR, with wavelengths above 2.5 µm. The criteria for these properties are values of solar thermal emittance e_{T}, determined at a temperature of 373 K and solar absorptance as, determined for 1.5 AM. These values can be determined according to DIN 5036, 3^{rd} part or to M. Köhl, G. Jorgensen, A.W. Czanderna, Performance and Durability Assessment: Optical Materials for Solar Thermal Systems, Elsevier, The Netherlands, 2004.

The solar thermal market is dominated by highly spectrally selective surfaces made of various cermet materials. Such examples are Sunselect™, Mirosol™, Miroterm™, produced by Alanod Aluminium Veredlung GmbH and Co KG and eta plus™ by BlueTec GmbH and Co KG. These coatings can be applied to various substrates, most often to copper and aluminium sheets and very high spectral selectivity can be achieved by adding an additional antireflection layer; typically, thermal emittance in these settings is e_{T} < 0.15 and solar absorptance, as > 0.90. These solutions have been disclosed in several patents; the most recent are disclosures of the corrosion-stable solar absorber in EP1867934 and in WO2011076448. All these coatings are prepared via physical vapour deposition, PVD, and chemical vapour deposition, CVD, methods which require very costly high-vacuum deposition lines. Production speed is limited and this additionally increases the already high price of such spectrally selective surfaces.

As an alternative, wet chemical processes, including spectrally selective paint coatings, have been developed during the last two decades, resulting in quite good selective paint coatings as disclosed in: B. Orel, Z. C. Orel, A. Krainer, M. G. Hutchins, Solar energy materials, 1991, 22, 259-279; B. Orel, H. Spreizer, L. S. Per 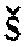 e, M. Fir, A. 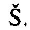 Vuk, D. Merlini, M. Vodlan, M. Köhl, Sol. Energy Mater. Sol. Cells 2007, 91, 93-107; B. Orel, H. Spreizer, A. S. Vuk, M. Fir, D. Merlini, M. Vodlan, M. Köhl, Sol. Energy Mater. Sol. Cells 2007, 91, 108-119. In EP2261288, implementation of a novel technology for pigment modification resulted in improved selectivity of selective coatings. Paint coatings can be applied by fast application on a coil-coating line, but the selectivity of the prepared coatings is still not high enough, due to the use of organic binders, which exhibit considerable absorption in the IR region and thus increase the thermal emittance, e_{T}.

In the publications: I. Jerman, M. Ko 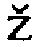 elj, B. Orel, Sol. Energy Mater. Sol. Cells 2010, 94, 232-245; I. Jerman, M. Mihel 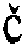 i 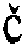 , D. Verhov 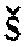 ek, J. Kova 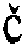 , B. Orel, Sol. Energy Mater. Sol. Cells 2011, 95, 423-431; a novel method for surface modification of pigments with trisilanol polyhedral silsesquioxane compounds was disclosed, but the modified pigments were used only for organic binder systems.

Publications: L. Kalu 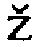 a, B. Orel, G. Dra 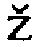 i 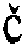 , M. Köhl, Sol. Energy Mater. Sol. Cells 2001, 70, 187-201 and J. Vince, A. 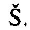 Vuk, U. O. Kra 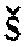 ovec, B. Orel, M. Köhl, M. Heck, Sol. Energy Mater. Sol. Cells 2003, 79, 313-330, reveal that spectrally selective surfaces can be prepared via sol-gel processing of transition metal salts, forming spinel type mixed oxide, which is a material of choice for solar absorbers but the procedure is not suitable for economic production due to the high annealing temperature of 450°C, and long annealing time, which is in excess of 15 min.

In the publication: M. R. Böhmer, T. A. P. M. Keursten, J. Sol-Gel Sci. Technol. 2000. 19, 361-364, a preparation of transparent pigmented sol-gel coatings is disclosed, application of the coatings was done only on glass by a spin-coating process. These coatings are transparent in the visible part of spectrum so they exhibit low solar absorptance and could not be used for solar thermal applications.

In the publication: S. Höfacker, M. Mechtel, M. Mager, H. Kraus, Prog. Org. Coat. 2002, 45, 159-164, a novel sol-gel derived clear and transparent coating is described. WO2011120593 discloses fabrication of a sol-gel derived highly transparent corrosion protection coating on metallic mirrors. Those coatings are highly transparent, highly UV stable and do not contain any pigment particles. There is no disclosure of solar light absorbing pigmented coating, which could be used for the preparation of absorbers for solar thermal collectors.

In the patent application WO2011087374, a method for making absorber coating of the solgel type based on CeO₂(NO₃) sol with added manganese ferrite black spinel Mn₃CU₂FeO₈ is disclosed. These coatings are mixed with organic resin binders in order to make coatings applicable for a coil coating deposition process.

In the publication: Z. Crnjak Orel,, M. KJanj 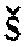 ek Gunde, M.G. Hutchins, Solar Energy Materials & Solar Cells 85 (2005) 41-50, the preparation of coloured TSSS paint coatings is disclosed. Standard industrial or laboratory equipment (high speed dispersers, pearl mill) and commercially available raw materials such as polysiloxane resin binder; black, yellow, ochre, dark ochre, green and blue high temperature stable spinel type (inorganic) pigments; and dispersant and rheological additives were used for their fabrication.

While the primary pigment particle size of black pigment was 0.4 mm, the particle size of the other pigments, such as yellow, ochre, dark ochre, green and blue, imparting colours were 1, 1.4, 0.9, 1.4, and 1.6 µm, respectively. The as values were lower than 0.90 - as obtained for the black coating - and the corresponding e_{T} values were not lower than 0.21. Colours expressed with chroma values defined as C* = (a*2 + b*2)1/2, where a* and b * were standard blue/yellow and green/red orthogonal axis of the L a*b* colour system, respectively, never reached values above 8.

The objective of the present invention is therefore to prepare a coating which strongly absorbs solar radiation and converts it to heat from different black inorganic pigments or in combination with organic pigments with various colours other than black by using paints, consisting of sol-gel binders and surface modified pigments with polyhedral oligomeric silsesquioxane, a composition that, due to the high pigment loading and sol-gel binders, provides a low thermal emittance of coatings by using a wet deposition technique, such as spraying, dip coating, slot casting, doctor blading and coil coating application processes on metallic substrates, providing spectrally selective solar absorbers.

### Summary of the invention

This invention is primarily sol-gel paints suitable for wet deposition of sol-gel coatings on metallic, preferentially aluminium and stainless steel solar absorbers, either flat panels or tubes, deposited by a coil coating or dip coating deposition technique, having the following characteristics:
- Solar absorptance: as from 0.84 to 0.94 for the spectral region from 300 to 2500 nm at coating thicknesses from 0.5 to 2.5 g/cm², expressed by weight of the dry coating deposited on the metallic substrate
- Low thermal emittance: e_{T} from 0. 02 to 0.18 for the spectral region from 2.5 to 50 µm at coating thicknesses from 0.5 to 2.5 g/cm², expressed by weight of the dry coating deposited on metallic substrate
- Selective coatings with the aforementioned as and e_{T} limiting values, providing for standard solar collector stagnation temperatures of 184°C and 179°C when the thicknesses of the applied coatings are from 1.6 to 2.3 g/cm2 with the coatings having aₛ = 0,915 and e_{T}= 0.12 and as = 0.93 and e_{T}= 0.18, respectively.
- Bluish-black colours: C* from 2 to 10 and the highest as up to 0.91 at the correspondingly lowest e_{T} values of 0.20.
- High temperature stability suitable for use as coatings for concentrated through solar collectors with working temperature up to 350°C but tolerating exposure to a temperature of 600°C for 500 h with average variations in as and e_{T} values giving a change in the performance criterion ΔPC = -Δa +0.5ΔeT < 0.02
- Life time thermal stability at operating conditions of flat solar collectors >25 years
- Stability against humidity 240 h
- Abrasion resistance up to HD3
- Long term stability: corrosion resistance in salt spray chamber up to 168 h. (microclimate ISO CD 12952-2).

### Detailed description of invention and embodiments

The present invention is described using figures depicted in Figures from 1 to 10:
Figure 1: SEM micrographs of the highly diluted sol-gel paint showing dispersed pigment particles.
Figure 2: Structure of polyfunctional tetra((diethoxymethylsilyl)ethyl)tetramethylcyclotetrasiloxane sol-gel organic-inorganic precursor.
Figure 3: Total hemispherical reflectance spectra of spectrally selective paint coatings (1) A1, A2 and A3.
Figure 4: Variation of e_{T} values as a function of thickness (in g/m²) for coatings (1)
Figure 5: Variation of as values as a function of thickness (in g/m²) for coatings (1).
Figure 6: e_{T} and as values for the black TSSS sol-gel coatings (1).
Figure 7: e_{T} and as values for the black TSSS sol-gel coatings (2).
Figure 8: e_{T} and as values for the bluish- black TSSS sol-gel coatings (3).
Figure 9: Variations of the chroma values expressed by C* = (a2 + b2)1/2 as a function of e_{T} values for the bluish- black- TSSS sol-gel coatings (3)
Figure 10: Variations of the chroma values (C* = (a2 + b2)1/2) as a function of as values for the bluish -black TSSS sol-gel coatings (3).

In accordance with this invention, corrosion, scratch and weather resistant black thickness sensitive spectrally selective (TSSS) paint coatings, characterized with as not lower than 0.91 and e_{T} not lower than 0.10 but not higher than 0.18, when the thickness of the embodiment coatings varied from 1.6 to 2.3 g/m², were obtained by using sol-gel paints consisting of black pigments modified with trisilanol heptaisobutylpolyhedralsilsesquioxane compound and sol-gel binder(s) in a suitable solvent mixture and their deposition on the metallic substrate in appropriate thickness. In addition, it was found that the black TSSS sol-gel based paint coatings can be made with a bluish hue by the addition of properly surface-modified organic pigments.

The core of this invention therefore consists of the several independent steps of preparing sol-gel paints, enabling in the final step the deposition of spectrally selective paint coatings by the execution of the following interrelated steps:
□ step (i) milling the inorganic black pigment particles to ∼150 nm size and their surface functionalization with trisilanol POSS in an amount sufficient to improve the dispersion property of the pigment;
   ∘ step (i/a) milling of organic pigment in organic solvent with suitable polymeric dispersant;
□ step (ii), re-dispersion of the dry functionalized pigment by milling with zirconia beads in the solvent, where no polymeric or sol-gel type binder is added. At this stage of manufacture, co-grinding with various sol-gel binders is not needed.

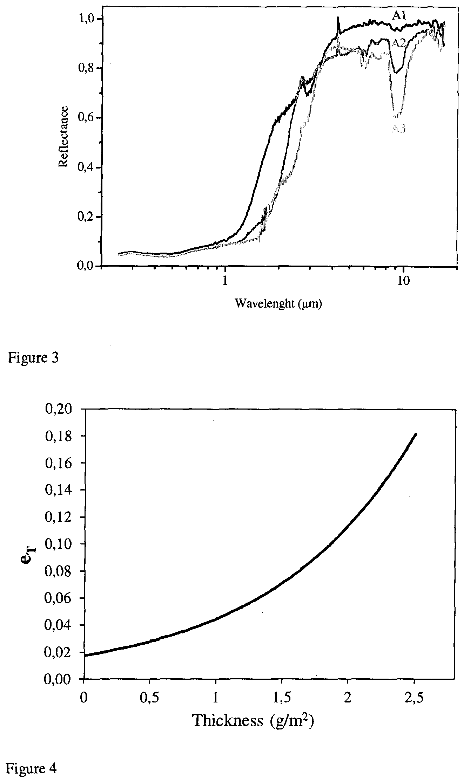

Step (i) and step (ii) must be executed consecutively but the time between these two steps is not limited.
□ step (iii) consists of using the pigment dispersion prepared in steps (i) and (ii) by preparing sol-gel binder
   ∘ step (iii/a), mixing it with the pigment dispersion;
   ∘ step (iii/b) preparing sol-gel paint;
   ∘ step (iii/c) deposition of the sol-gel paint on the metallic substrate whose spectral selectivity is presented in Tables I and II and Figures 3-7,
□ step (iv) preparation of pigment (step (i)), pigment dispersion (step (ii)), sol-gel binder (step (iii/a)), sol-gel paint (step (iii/b)) and sol-gel TSSS coatings (step (iii/c).

In step (i), the black spinel pigment particles are functionalized with trisilanol POSS (isobutyl, isooctyl, phenyl, fluoropropyl) but preferentially with isobutyl. Trisilanol POSS is dissolved in a non-polar solvent, such as petrolether, hexane, heptane, octane, THF; preferably from about 0.5 to about 25 wt.%, ideally from about 3 to 8 wt.%, POSS compounds added to the dispersion refer to the total weight of the pigment in composition. The added black spinel pigment is mixed with a high speed dissolver, milled first with zirconia beads with a diameter of 3 mm and then re-milled with smaller beads, i.e., 0.4 mm,

In step (i/a), the organic dispersant, preferentially Byk 2511 in combination with Synergist was used for the functionalization of organic pigment, preferentially Heliogen blue 6911 in 1-butanol by using zirconia beads with diameter 0.4 mm and milled for ½ h.

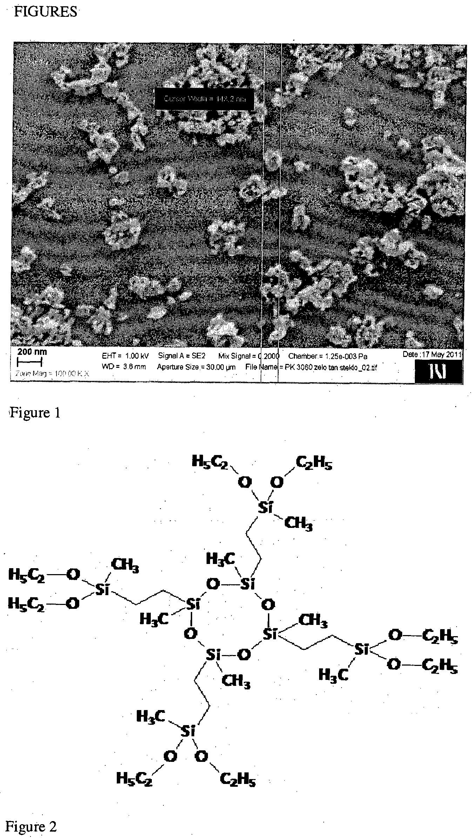

Step (ii) consists of first mixing the dry functionalized black spinel pigment with a solvent such as 1-butanol, 2-butanol, ethanol, glycol, but preferentially with 1-butanol, The resulting solvent/functionalized pigment mixture is milled with zirconia beads with diameter 0.4 mm four ½ h, The homogeneous trisilanol POSS/black spinel functionalized pigment/solvent dispersion is characterized by particles of a size of ∼150 nm as shown in Figure 1. The dispersion is stable for more than half a year and no re-milling is necessary before the deposition of coatings, No sedimentation of pigment was observed because of effective modification of the pigment particles with trisilanol POSS.

In step iii/a, sol-gel binder is prepared separately in alcohol solvent. Various bi-functional silanes, including methyltrimethoxysilane, tetraethoxysilane (TEOS), glycidoxypropyltriethoxy silane, aminopropyl-triethoxysilane, phenmyltrimethoxysilane and tetra((diethoxymethylsilyl)ethyl)-tetramethylcyclo-tetrasiloxane, sol-gel precursors, the latter shown in Figure 2, can be used. Hydrolysis is achieved by the addition of catalysts, for example diluted 0.1M acids such as hydrochloric, acetic or nitric acid in concentrations from 0.01M to 1M, preferably in molar concentrations from 0.1 to about 0.5M. Glycidoxy propyltriethoxy silane, TEOS or tetra((diethoxymethyl-silyl)ethyl)tetramethylcyclo-tetrasiloxane were preferentially used as the sol-gel precursor, in concentrations up to 50%, preferably not more than 45%.

In step iii/b, the sol-gel hydrolysed alkylalkoxysilanes precursors are added to the already made pigment/solvent mixture prepared in steps (i) and (ii), leading to the sol-gel paints. Glycidoxy propyltriethoxy silane, TEOS or tetra((diethoxymethylsilyl)ethyl)tetramethyl-cyclo-tetrasiloxane were preferentially used as sol-gel precursors. The resulting mixture is mixed with a high speed mixer such as Dispermat for ½ h in order to obtain a homogeneous mixture. The typical concentration of functionalized pigment in the final sol-gel paint is from 5 to 40 wt.% but preferably no more than 5 to 20% by weight.

In step iii/c, the sol-gel paint prepared in step iii/b, is used for the deposition of spectrally selective paint coatings, the spectrally selective properties of which are shown in Figures 3 to 10. Coatings are made by a spin coater at various rotation speeds in order to adjust the thickness of the coatings or on a coil coating system, or can be deposited by spraying with standard spraying equipment. Aluminium, stainless steel, inconel and other steel alloys in the form of flat plates, coils or tubes are used as the substrate.

Step (iv) comprised preparation of coloured TSSS sol-gel paints by execution of step (i) and step (iii./a and iii/b), embodying the preparation of black sol-gel paint and mixing it with paint consisting of a dispersion of phtallocyanine organic pigment, preferentially Heliogen blue 6911 pigment, whose surface was modified with organic dispersant, as described in step (i/a), providing pigment compatibility in the solvents, preferentially 1-butanol in concentrations from 5% to 15 %, with respect to the black sol-gel paint preferentially 10-30%. The coating was prepared as described in step iii/c by using the corresponding mixture of the sol-gel paint and the dispersion of blue organic pigment, the colour of which was characterized with metric chroma value C* determined by the corresponding colour coordinates a* and b* and selectivity values as and e_{T}.

### Properties of sol-gel coatings made from sol-gel paints.

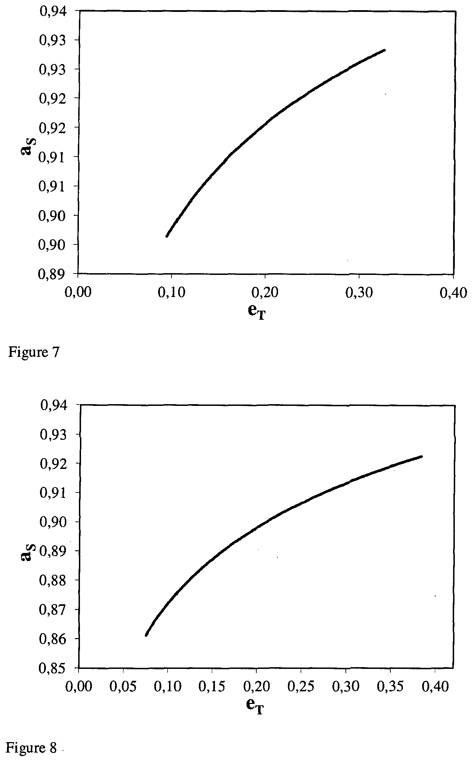

In Figures 3 to 6, the optical properties of black sol-gel TSSS coatings are presented by highlighting the beneficial influence of the sol-gel paints made of trisilanol POSS modified pigment particles and glycidoxy propyltriethoxy silane as a sol-gel binder, described as coatings (1). Figure 7 shows the optical properties of black sol-gel coatings prepared from tetra((diethoxy-methylsilyl)ethyl)tetramethylcyclotetrasiloxane/tetraethoxysilane sol-gel binders, described as coatings (2), while Figure 8 presents the optical properties of bluish - black coloured TSSS paint coatings made from a mixture of blue organic and black inorganic pigments with TEOS and tetra((diethoxymethylsilyl)ethyl)tetramethylcyclo-tetrasiloxane sol-gel binder, described as coatings (3),

Coating (1) Optical properties of sol-gel TSSS paint coatings made of trisilanol POSS modified pigment particles and glycidoxy propyltriethoxy silane as a sol-gel binder.

Optical properties of the coating (1) expressed with as, and e_{T} values obtained from total hemispherical reflectance spectra measured in the spectral region from 0.3 µm up to 14 µm on a Perkin Elmer Lambda 9 and Bruker IFS 66, with integrating sphere of black pigment based TSSS sol-gel paint coatings made of trisilanol POSS modified pigment particles and glycidoxy propyltriethoxy silane obtained by consecutive i.e. 1^{st}, 2^{nd} and 3^{rd}, deposition by spin coating of the sol-gel paint characterized by a concentration of pigments equal to 30% by weight of the sol-gel binder per total weight are presented in Figure 3. Fig. 3 shows the hemispherical reflectance spectra of selected coatings presented as A1, A2 and A3, revealing high pigment loadings that are higher than those of other TSSS paint coatings in which polymeric resin binders (polyurethane, silicone, fluoropolymer) were used. This is inferred from the fairly low intensity of the downward turned bands corresponding to the absorption modes of either trisilanol POSS or glycidoxy propyltriethoxy silane. Not all the bands stemming from the two silane compounds can be differentiated with high accuracy because at least the Si-O-Si modes in the ∼1000 cm⁻¹ spectral region overlapped. However, the modes attributed to the isobutyl CH₂ and CH₃ groups can still be recognized in the spectra, signalling the retained organic-inorganic hybrid network of the sol-gel binder. As expected, the intensity of the downward oriented absorption bands increased with the coating thickness, being smallest for the thinnest (A1) and most intensive for the thickest coatings (A3).

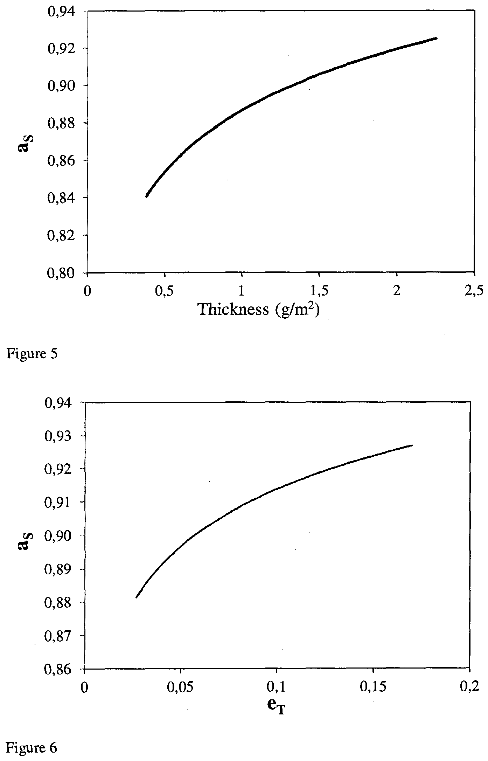

The main driving force of this invention was the amount of sol-gel binder that enabled the deposition of the coatings with a pigment loading from 45 to 70%, preferentially 55%, exceeding the pigment loading of 43% achieved for the TSSS paint coatings disclosed in Patent WO 2010/133693. The comparison of the as and e_{T} values shown in Figure 4 and Figure 5 confirmed that for the range of the coating thicknesses from 1.7 to 2.3 g/m², much higher as and lower e_{T} values, shown in Figure 6, were obtained than those disclosed in Patent WO 2010/133693.

For coatings described by thickness in the typical range from 1.7 up to 2.3 g/m², the invented TSSS sol-gel paint coating provided selectivity characterized by bordering selectivity aₛ/e_{T} values, as = 0.93/e_{T} = 0.18 for a thickness of 2.3 g/m² and as = 0.91/e_{T} = 0.08 for a thickness of 1.7 g/m², while for the TSSS paint coatings disclosed in Patent WO 2010/133693, where silicone resin binder in combination with aminosilane dispersant were used, the corresponding selectivity values aₛ/e_{T} are as = 0.91/e_{T}=0.25 for a thickness of 2.3 g/m² and as = 0.89/e_{T}=0.16 for a thickness of 1.7 g/m².

The results confirmed that the sol-gel binder used provided sufficiently strong particle-to particle interactions to ensure abrasion resistance HD2-HD3 (pencil hardness test ASTM D3363), corrosion resistance in a salt spray chamber up to 168 h (microclimate ISO CD 12952-2) and life time thermal stability at operating conditions of flat solar collectors >25 years.

### Coating (2) Optical properties of black sol-gel TSSS paint coatings made of trisilanol POSS modified pigment particles and tetra((diethoxymethylsilyl)ethyl)tetramethylcyclotetrasiloxane/ tetraethoxysilane sol-gel binders.

The optical properties of coatings (2) expressed with as, and e_{T} values obtained from total hemispherical reflectance spectra measured in the spectral region from 0.3 µm up to 14 µm on a Perkin Elmer Lambda 9 and Bruker IFS 66 with integrating sphere of black pigment based TSSS sol-gel paint coatings made of trisilanol POSS modified pigment particles and tetra((diethoxymethylsilyl)ethyl)tetramethylcyclo-tetrasiloxane/tetraethoxysilane obtained by the 1^{st}, 2^{nd}, 3^{rd} and 4^{th} consecutive spin coating deposition of the sol-gel paint characterized by a concentration of pigments equal to 60% by weight per total weight of dry coating are presented in Figure 7,

Spectral selectivity expressed by the pairs of spectral selectivity values aₛ/e_{T} of 0.90/0.12, and 0.91/0.16 in Figure 7 for coatings (2) was higher than the selectivity of the coatings invented in Patent WO 2010/133693, in which coatings having the same as values of 0.91 and 0.90 exhibit e_{T} values of 0.24 and 0.18, respectively.

### Coating (3) Optical properties of the coloured sol-gel TSSS paint coatings.

The optical properties of the coloured sol-gel TSSS paint coatings made of trisilanol POSS modified black pigment particles and blue phtalocyanine pigment surface modified with organic dispersant and tetra((diethoxymethylsilyl)ethyl)-tetramethylcyclotetrasiloxane/ tetraethoxysilane sol-gel binders are presented in Figure 8.

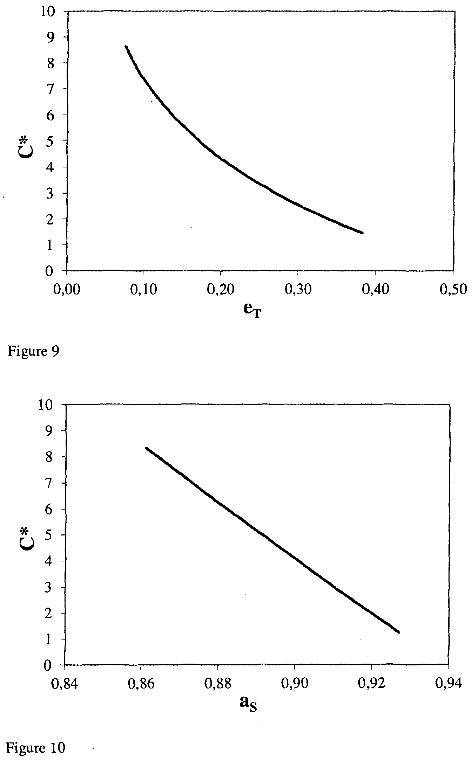

The results revealed that the bluish-black TSSS sol-gel paint coatings exhibited variable selectivity parameters and chroma (C*) values that were interrelated. For example, when as = 0.86 and e_{T} = 0.08 , C* as shown in Figure 9 and 10 is relatively high, reaching a value of 8, but when as values as high as 0.92 were desired, a thicker coating was deposited, which concurrently considerably increased e_{T} values, even to 0.34.

### Embodiment 1: black TSSS sol-gel paint coating (1)

### Step (i)

### Modification of pigment:

200 g of pigment PK 24-3060 (Ferro GmbH)
16 g of isobutil trisilanol POSS (NIC)
1000 mL petrolether (Merck)
Milling 1 hour with 3 and 0.4 mm beads

### Step (ii)

Preparation of the pigment dispersion
170 g dry modified pigment from step (i)
1000 g 1-butanol (Aldrich)
Milling ½ h with 0.4 mm zirconia beads

### Step (iii/a)

Preparation of the sol-gel binder
30 g Glymo (ABCR GmbH & Co.)
10 g 0.1M HCl (aq) (Merck)
40 g EtOH (Carlo Erba)
Mixing 1h

### Step (iii/b)

Preparation of sol-gel paint (Sample A1, A2, A3)
100 g of pigment dispersion from step (ii)a
30 g of binder from step (ii)b
Addition of solvent to achieve viscosity of 13 s,

### Step (iii/c)

### Deposition of coatings

Sol-gel paint obtained after implementation of the previous steps was applied on the metal substrate via spin coating, coil coating, doctor blading or spraying.

### Embodiment 2: black TSSS sol-gel paint coating(2)

Pigment was modified and the pigment dispersion was made as described in Step (i) and Step (ii).

### Step (iii/a)

Preparation of the binder
12 g tetraethoxysilane (Aldrich)
12 g tetra((diethoxymethylsilyl)ethyl)tetramethylcyclotetrasiloxane (Saltigo GmbH)
4 g 0.1M HCl (aq)
12 g 2-butanol (Aldrich)
12 g Ethanol (Carlo Erba)
Mixing 1 h

### Step (iii/b)

Preparation of sol-gel paint
100 g of pigment dispersion from step (ii)
50 g of binder from step (iii)a
Addition of solvent to achieve viscosity of 13 s.

### Step (iii/c)

### Deposition of coatings

Sol-gel paint obtained after implementation of the previous steps was applied on the metal substrate via spin coating, coil coating, doctor blading or spraying.

### Embodiment 3: coloured TSSS sol-gel paint coating(3)

Black pigment was modified as in step (i) and step (ii), the blue pigment dispersion step (i/a) and sol-gel binder were prepared as described in example 2, step (iii/a)

### Step (i/a) blue pigment dispersion

25 g Heliogen Blue 6911
75 g 1-Butanol
Milled with zirconia beads ½ h.

### Step (iii/a)

Preparation of the binder
18 g tetraethoxysilane (Aldrich)
18 g tetra((diethoxymethylsilyl)ethyl)tetramethylcyclotetrasiloxane (Saltigo GmbH)
6 g 0.1M HCl (aq)
18 g 2-butanol (Aldrich)
18 g Ethanol (Carlo Erba)
Mixing 1 h

### Step (iii/b) Preparation of coloured sol-gel paint

100 g of black pigment dispersion from step (ii)
60 g of HELIOGEN® BLUE K 6911 D (BASF) pigment dispersed in 1-butanol
70 g of binder from step (iii/a)
Addition of solvent to achieve viscosity of 13 s.

### Step (iii/c)

### Deposition of coatings

Sol-gel paint obtained after implementation of the steps outlined above was applied on the metal substrate via spin coating, coil coating, doctor blading or spraying.

## Claims

1. A sol-gel paint having the composition of
(i) black spinel type pigment providing absorption of solar radiation;
(ii) open polyhedral oligomeric silsesquioxanes, which provides the modified black spinel pigment particles in dry form;
(iii) solvent, preferably pigment dispersions from modified pigment particles in alcohol compounds, ethers, esters or their mixture
(iv) polyfunctional silane acting as a binder which provides mechanical and thermal stability;
(v) other organic pigments enabling the modification of colour of selective coating;
(vi) catalysts for starting hydrolysis followed by condensation of polyfunctional silane, wherein the composition comprises the following sol-gel binders:
- tetraalkoxy silane from 20 to 40% (w/w);
- tetra((diethoxymethylsilyl)ethyl)tetramethylcyclotetrasiloxane from 20 to 40% (w/w); black pigment dispersion from 40 to 60% (w/w).

2. Sol-gel paint according to claim 1 wherein the open polyhedral oligomeric silsesquioxanes are:
- trisilanol polyhedral hepta alkyl silsesquioxane molecules selected from isobutyl, isooctyl, phenyl or others, 5 to 15% (w/w) to the black spinel pigment.

3. Sol-gel paint according to claims 1 and 2, wherein the pigment is in a form of a dispersion of 10 to 25% (w/w) of the modified pigment with particles size between 50 to 300 nm, prepared by grounding in aromatic, aliphatic, ketone, ether, ester or alcohol compound, preferentially 1-butanol, with zirconia spheres, which have diameter smaller than 2 mm.

4. Sol-gel paint according to claims 1 to 3, comprising sol-gel binders:
- glycidoxypropyltriethoxy silane 0 to 15% (w/w),
- black pigment dispersion from 40 to 60% (w/w),

5. Sol-gel paint composition according to claims 1 to 4 wherein perfluorooctyltriethoxy silane from 0 to 15% (w/w) is added as low surface energy additive.

6. Sol-gel paint according to claims 1 to 4 wherein organic pigment modified with standard surface modifiers is added from 10 to 30% (w/w) to the total weight of pigment.

7. The use of sol-gel paint according to claims 1 to 6 to provide a thickness sensitive spectrally selective coating on metallic substrates applied by wet deposition techniques for facilitating the harvest of solar energy in the form of heat in solar thermal systems wherein metallic substrate is preferentially selected from, aluminium or stainless steel, a metal alloy applied by spraying, dip-coating or coil-coating and slot casting, preferentially by coil coating technique in that dry layer of thickness between 500 and 1500 nanometers is created.

8. Thickness sensitive spectrally selective coating wherein the sol-gel paint according to claim 5 is applied according to claim 7, **characterized by** spectral selectivity of aₛ > 0.90 solar absorptance and by a thermal emittance of e_{T} < 0.18.

9. Thickness sensitive spectrally selective coating wherein the sol-gel paint according to claim 6 is applied according to claim 7, **characterized by** spectral selectivity of aₛ of 0.90 solar absorptance and by a thermal emittance not lower than e_{T} = 0. 1 8 with colour strength from C* =2 to C*=10.

10. Thickness sensitive spectrally selective coating according to claims 7 to 9, wherein it exhibits any combination of one or more of the following properties:
i) does not peel from the metal surface or crack immediately after curing even when a thickness of a paint layer exceeds 4 microns;
ii) consistently stays black even as a thin coat of less than 300 nm when painted onto aluminium coils;
iii) thermal durability at high temperatures such that it substantially does not ablate over a time period of 20 days when maintained at 600°C;
iv) mechanical durable with hardness at least HD3 ; and/or
v) a thin coat of less than 1000 nm protects aluminium from ambient moisture.

## Patentansprüche

1. Sol-Gel-Anstrichfarbe mit der Zusammensetzung von
(i) einem schwarzen Pigment vom Spinelltyp, das eine Absorption von Sonnenstrahlung bereitstellt;
(ii) offenen polyedrischen oligomeren Silsesquioxanen, welche die modifizierten schwarzen Spinellpigmentteilchen in trockener Form bereitstellen;
(iii) Lösungsmittel, vorzugsweise Pigmentdispersionen von modifizierten Pigmentteilchen in Alkoholverbindungen, Ethern, Estern oder ihrer Mischung
(iv) polyfunktionellem Silan, das als Bindemittel dient, welches mechanische und thermische Stabilität bereitstellt;
(v) anderen organischen Pigmenten, welche die Modifizierung der Farbe einer selektiven Beschichtung ermöglichen;
(vi) Katalysatoren zum Starten einer Hydrolyse gefolgt von einer Kondensation von polyfunktionellem Silan, wobei die Zusammensetzung die folgenden Sol-Gel-Bindemittel umfasst:
- Tetraalkoxysilan in einer Menge von 20 bis 40% (Gew./Gew.);
- Tetra((diethoxymethylsilyl)ethyl)tetramethylcyclotetrasiloxan in einer Menge von 20 bis 40% (Gew./Gew.);
schwarze Pigmentdispersion in einer Menge 40 bis 60% (Gew./Gew.)

2. Sol-Gel-Anstrichfarbe gemäß Anspruch 1, wobei die offenen polyedrischen oligomeren Silsesquioxane folgendes sind:
- Trisilanol polyedrische Heptaalkylsilsequioxanmoleküle ausgewählt aus Isobutyl, Isooctyl, Phenyl oder anderen, 5 bis 15% (Gew./Gew.) zu dem schwarzen Spinellpigment.

3. Sol-Gel-Anstrichfarbe gemäß den Ansprüchen 1 und 2, wobei das Pigment in Form einer Dispersion von 10 bis 25% (Gew./Gew.) des modifizierten Pigments mit einer Teilchengröße zwischen 50 bis 300 nm vorliegt, hergestellt durch Mahlen in einer aromatischen, aliphatischen, Keton-, Ether- Ester- oder Alkhoholverbindung, vorzugsweise 1-Butanol, mit Zirkonoxidkugeln, welche einen Durchmesser von weniger als 2 mm aufweisen.

4. Sol-Gel-Anstrichfarbe gemäß den Ansprüchen 1 bis 3, umfassend Sol-Gel-Bindemittel:
- Glycidoxypropyltriethoxysilan 0 bis 15% (Gew./Gew.),
- schwarze Pigmentdispersion in einer Menge von 40 bis 60% (Gew./Gew.).

5. Sol-Gel-Anstrichfarbenzusammensetzung gemäß den Ansprüchen 1 bis 4, wobei Perfluoroctyltriethoxysilan in einer Menge von 0 bis 15% (Gew./Gew.) als niedrige Oberflächenenergie-Additiv zugegeben wird.

6. Sol-Gel-Anstrichfarbe gemäß den Ansprüchen 1 bis 4, wobei ein organisches Pigment, das mit Standard-Oberflächenmodifiziermitteln modifiziert ist, in einer Menge von 10 bis 30% (Gew./Gew.) zu dem Gesamtgewicht des Pigments zugegeben wird.

7. Verwendung der Sol-Gel-Anstrichfarbe gemäß den Ansprüchen 1 bis 6 zum Bereitstellen einer dickenempfindlichen spektral selektiven Beschichtung auf metallischen Substraten, die durch Nassabscheidungsmethoden aufgebracht ist, um die Ernte von Solarenergie in Form von Wärme in solarthermischen Systemen zu erleichtern, wobei das metallische Substrat vorzugsweise ausgewählt ist aus Aluminium oder Edelstahl, einer Metalllegierung, die durch Sprühen, Tauchbeschichten oder Bandbeschichten und Spaltguss, vorzugsweise durch eine Bandbeschichtungsmethode beschichtet werden, in der eine trockenen Schicht mit einer Dicke zwischen 500 und 1500 Nanometer geschaffen wird.

8. Dickenempfindliche spektral selektive Beschichtung, wobei die Sol-Gel-Anstrichfarbe gemäß Anspruch 5 gemäß Anspruch 7 aufgetragen wird, **gekennzeichnet durch** eine spektrale Selektivität von aₛ > 0,90 solarer Absorptionsgrad und **durch** ein thermisches Emissionsvermögen von e_{T} < 0,18.

9. Dickenempfindliche spektral selektive Beschichtung, wobei die Sol-Gel-Anstrichfarbe gemäß Anspruch 6 gemäß Anspruch 7 aufgetragen wird, **gekennzeichnet durch** eine spektrale Selektivität von aₛ von 0,90 solarer Absorptionsgrad und **durch** ein thermisches Emissionsvermögen von nicht weniger als e_{T} = 0,18 mit einer Farbstärke von C* = 2 bis C* = 10.

10. Dickenempfindliche spektral selektive Beschichtung, gemäß den Ansprüchen 7 bis 9, wobei sie eine beliebige Kombination von einer oder mehreren der folgenden Eigenschaften aufweist:
i) schält sich nicht von der Metalloberfläche ab oder reißt nicht sofort nach dem Härten, selbst wenn die Dicke einer Anstrichfarbschicht 4 Mikrometer übersteigt;
ii) bleibt beständig schwarz selbst als ein dünner Überzug von weniger als 300 nm, wenn sie auf Aluminiumbänder aufgetragen ist;
iii) thermische Beständigkeit bei hohen Temperaturen, so dass sie über einen Zeitraum von 20 Tagen im Wesentlichen nicht abdampft bzw. abgetragen wird, wenn sie bei 600 °C gehalten wird;
iv) mechanisch beständig mit einer Härte von wenigstens HD3; und/oder
v) ein dünner Überzug von weniger als 1000 nm schützt Aluminium vor Umgebungsfeuchtigkeit.

## Revendications

1. Peinture sol-gel présentant la composition suivants :
(i) pigment type spinelle noire procurant une absorption de la radiation solaire ;
(ii) silsesquioxanes oligomères polyédriques procurant les particules de pigment de spinelle noire modifié sous forme sèche ;
(iii) solvant, de préférence dispersions de pigment de particules de pigment modifié dans des composés alcooliques, des éthers, des esters ou des mélanges de ceux-ci ;
(iv) silane polyfonctionnel agissant comme un liant pour procurer une stabilité mécanique et thermique ;
(v) autres pigments organiques permettant la modification de couleur d'un revêtement sélectif ;
(vi) catalyseurs pour démarrer une hydrolyse suivie par une condensation de silane polyfonctionnel,
dans laquelle la composition comprend les liants sol-gel suivantes :
- de 20 % à 40 % (masse/masse) de tétraalkoxysilane ;
- de 20 % à 40 % (masse/masse) de tétra((diéthoxyméthylsilyl)éthyl)tétraméthylcyclotétrasi loxane ;
- de 40 % à 60 % (masse/masse) de dispersion de pigment noir.

2. Peinture sol-gel selon la revendication 1, dans laquelle les silsesquioxanes oligomères polyédriques ouverts sons :
- des molécules d'hepta-alkylsilsesquioxane polyédrique trisilanol de composés sélectionnés parmi l'isobutyle, l'iso-octyle, le phényle ou d'autres composés, à raison de 5 % à 15 % (masse/masse) du pigment de spinelle noire.

3. Peinture sol-gel selon les revendications 1 et 2, dans laquelle le pigment se présente sous forme d'une dispersion de 10 % à 25 % (masse/masse) du pigment modifié avec une taille de particule comprise entre 50 nm et 300 nm, préparée par mouture dans un composé aromatique, aliphatique, cétone, éther, ester ou alcool, de préférence dans du 1-butanol, avec des billes de zircone ayant un diamètre inférieur à 2 mm.

4. Peinture sol-gel selon les revendications 1 à 3, comprenant les liants sol-gel suivants :
- de 0 % à 15 % (masse/masse) de glycidoxypropyltriéthoxy silane,
- de 40 % à 60 % (masse/masse) de dispersion de pigment noir.

5. Composition de peinture sol-gel selon les revendications 1 à 4, dans laquelle de 0 % à 15 % (masse/masse) de perfluoro-octyltriéthoxy silane est ajouté comme additif de faible énergie de surface.

6. Peinture sol-gel selon les revendications 1 à 4, dans laquelle un pigment organique modifié à modificateurs de surface standard est ajouté à raison de 10 % à 30 % (masse/masse) de la masse totale du pigment.

7. Utilisation d'une peinture sol-gel selon les revendications 1 à 6 pour procurer un revêtement sélectif spectralement sensible à l'épaisseur sur des substrats métalliques, appliqué par des techniques de dépôt par voie humide, pour faciliter la collecte d'énergie solaire sous forme de chaleur dans des systèmes solaires thermiques, dans laquelle le métal du substrat métallique est de préférence sélectionné parmi l'aluminium, l'acier inoxydable ou un alliage métallique, appliqué par pulvérisation, enduction par trempage ou prélaquage et enduction fente, de préférence par une technique de prélaquage dans laquelle une couche sèche d'une épaisseur comprise entre 500 et 1500 nanomètres est créée.

8. Revêtement sélectif spectralement sensible à l'épaisseur, dans lequel la peinture sol-gel selon la revendication 5 est appliquée selon la revendication 7, **caractérisé par** une sélectivité spectrale aₛ > 0,90 fois le facteur d'absorption solaire et par une émissivité thermique e_{T} < 0,18.

9. Revêtement sélectif spectralement sensible à l'épaisseur, dans lequel la peinture sol-gel selon la revendication 6 est appliquée selon la revendication 7, **caractérisé par** une sélectivité spectrale aₛ = 0,90 fois le facteur d'absorption solaire et par une émissivité thermique supérieure ou égale à e_{T} = 0,18 avec une intensité de couleur comprise entre C* = 2 et C* = 10.

10. Revêtement sélectif spectralement sensible à l'épaisseur selon les revendications 7 à 9, dans lequel le revêtement présente une combinaison quelconque d'une ou plusieurs des propriétés suivantes :
(i) ne pèle pas de la surface métallique ou ne se fissure pas immédiatement après le durcissement même quand l'épaisseur de la couche de peinture dépasse 4 microns ;
(ii) reste uniformément noir même lorsqu'une couche mince de moins de 300 nm est appliquée sur des bobines d'aluminium ;
(iii) durabilité thermique à haute température telle qu'il ne s'ablate pas substantiellement sur une durée de 20 jours alors qu'il est maintenu à 600 °C ;
(iv) durabilité mécanique avec une dureté d'au moins HD3 ; et/ou
(v) un fin revêtement d'une épaisseur inférieure à 1000 nm protège l'aluminium de l'humidité ambiante.
